# FASCICULE DE BREVET EUROPEEN

(11) **EP 0 353 143 B1**
(45) Date de publication et mention de la délivrance du brevet: **05.01.1994**
(21) Numéro de dépôt: 89402103.9
(22) Date de dépôt: 25.07.1989
(51) Int. Cl.: H04N 7/14, H04M 1/02

(54) **Terminal de télécommunication à commande de fonctions perfectionnée**
Telekommunikationsendgerät mit verbesserter Funktionssteuerung
Telecommunication terminal with modified function control

(30) Priorité: 25.07.1988 FR 8810003
(43) Date de publication de la demande: 31.01.1990
(73) Titulaire: FRANCE TELECOM, 75015 Paris (FR)
(72) Inventeur: Guichard, Jacques, F-75015 Paris (FR); Buchner, Georges, F-75012 Paris (FR); Labat, Jacques, F-92320 Chatillon (FR)
(74) Mandataire: Warcoin, Jacques

(56) Documents cités:
- EP-A- 0 156 297
- BELL SYSTEM TECHNICAL JOURNAL, vol. 50, no. 2, février 1971, pages 271-312; W.B. CAGLE et al.: "2C Video telephone station set"
- PATENT ABSTRACTS OF JAPAN, vol. 9, no. 270 (E-353)[1993], 26 octobre 1985, page 57 E 353 & JP-A-60 114 055

## Description

La présente invention a trait d'une façon générale au domaine de la téléphonie et de la visiophonie, et concerne plus particulièrement un dispositif perfectionné pour faciliter les commandes de fonctions d'un téléphone ou d'un visiophone par l'opérateur.

Lors d'une communication en visiophonie, il est important que le sujet reste relativement immobile par rapport à la caméra du visiophone, ceci afin que son interlocuteur distant dispose d'une image de qualité convenable, et en particulier qui puisse être regardée sans fatigue et sans gêne dans des conditions optimales.

Cependant, il arrive qu'au cours d'une communication en visiophonie, un interlocuteur ait à effectuer des commandes en agissant par exemple sur des parties mobiles ou sur des touches du visiophone.

Par exemple, dans le cas d'un visiophone équipé d'un système de cadrage manuel, il peut avoir à modifier l'orientation de la caméra pour modifier son propre cadrage, ou bien il peut souhaiter modifier les réglages, en luminosité ou en contraste, de l'écran de visualisation ou de son visiophone, etc. ou encore il peut souhaiter mettre l'installation on position dite "mains libres" par enfoncement d'une touche appropriée du terminal.

Ces interventions de l'utilisateur sont indésirables en ce qu'elles nuisent au confort visuel de l'interlocuteur situé à l'autre bout.

En particulier, l'utilisateur peut avoir à se rapprocher du terminal à tel point que, son visage étant trop proche de la caméra. L'image de celui-ci est dégradée. Une autre éventualité consiste à ce que l'utilisateur, effectuant le réglage ou la manipulation, fasse passer sa main dans le champ de la caméra, à grande proximité de celle-ci. Il en résulte alors que l'image dont dispose l'interlocuteur distant est temporairement masquée en tout ou partie, ce qui est bien entendu indésirable. Enfin, il est possible que l'utilisateur sorte du champ de la caméra pour effectuer les manipulations.

On connaît déjà par le document Bell System Technical Journal, vol. 50, n° 2, février 1971, pages 271-312; W.B. Cagle et al.: "2C Video Telephone Station Set" un terminal conforme au préambule de la revendication 1.

Un tel terminal ne résoud cependant pas les problèmes ci-dessus. En effet, les moyens de commutation sont logés dans un boîtier de commande devant reposer sur une table devant l'utilisateur; ce dernier, pour modifier les réglages, peut donc être amené à se déplacer, ce qui dégrade la prise de vue.

En outre, lorsque le terminal est équipé d'un combiné, l'utilisateur se retrouve en présence de deux boîtiers, celui des boutons de réglage et celui du combiné, reliés chacun par un cordon au terminal; ceci nuit au confort d'utilisation.

La présente invention vise à pallier ces inconvénients de la technique antérieure et à proposer un dispositif de commande de fonctions pour visiophone ou analogue qui permette de conserver à tout instant une prise de vue correcte de l'utilisateur, tout en présentant un excellent confort d'utilisation.

A cet effet, la présente invention concerne un terminal tel que défini ci-dessus, ayant en outre les particularités de la partie caractérisante de la revendication 1.

Des aspects préférés du terminal de télécommunication selon l'invention sont définis dans les revendications dépendantes.

D'autres aspects, buts et avantages de la présente invention apparaîtront mieux à la lecture de la description détaillée suivante d'une forme de réalisation préférée de celle-ci, donnée à titre d'exemple et faite en référence aux dessins annexés, sur lesquels :
- la figure 1 est une vue en perspective schématique d'un terminal conforme à la présente invention,
- la figure 2 est un schéma d'un exemple d'un circuit de commande de fonction dudit terminal, et
- la figure 3 représente un schéma de principe d'un autre circuit de commande de fonction conforme à l'invention.

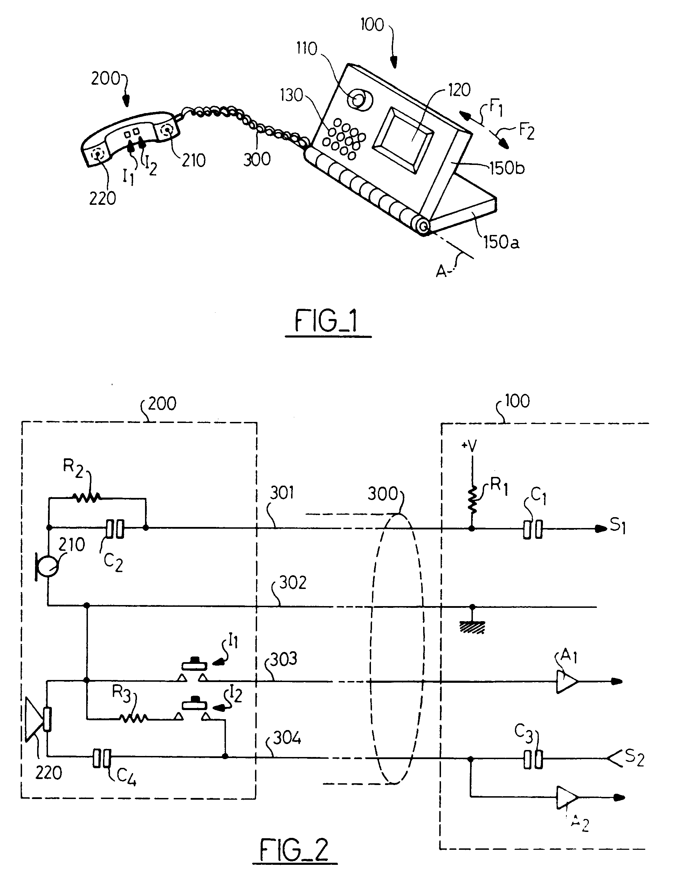

En référence tout d'abord à la figure 1, un terminal de télécommunication sonore et visuelle, de type visiophone, comprenant une unité centrale 100, représentée schématiquement et équipée d'une caméra 110, d'un écran de visualisation 120, d'un clavier 130 et d'un support de combiné (non représenté).

Dans le présent exemple, le boîtier de l'unité centrale comprend une base 150a et une partie 150b articulée à la base autour d'un axe horizontal A et abritant l'ensemble des fonctions du terminal.

Le terminal comprend en outre un combiné 200, analogue dans sa forme générale à un combiné téléphonique ordinaire, abritant classiquement un microphone 210 et un haut-parleur 220.

Le combiné 200 est relié à l'unité centrale par un cordon 300 à quatre fils, de façon également bien connue.

Dans le présent exemple de réalisation, le terminal présente la fonctionalité consistant en ce que, à l'aide d'un moteur électrique approprié et de son circuit de commande associé (non représentés), la partie articulée 150b peut être basculée au choix dans chacune des deux directions directions (flèches F₁ et F₂) pour ainsi faire varier l'axe de visée de la caméra 110 et adapter le cadrage à la stature ou à la posture de l'interlocuteur.

Conformément à la présente invention, les moyens de commande de cette fonction comprennent deux interrupteurs à poussoir I₁ et I₂ de type fugitif, qui sont montés dans le combiné 200, et ces interrupteurs mettent en jeu, comme on va le voir en détail ci-dessous, des tensions de commande continues véhiculées dans le cordon 300 sous forme de tensions fantômes.

En référence maintenant à la figure 2, on a représenté le combiné 200 comprenant le microphone 210, relié au terminal 100 par deux fils 301, 302 du cordon 300, et le haut-parleur 220, relié audit terminal par deux autres fils 303, 304.

Le microphone 210 est ici du type à électret, et il est prévu à cet effet une alimentation continue fantôme +V appliquée au fil 301 via une résistance R₁ dans l'unité centrale 100. Dans le combiné 200 sont prévus en correspondance, de façon bien connue, une résistance R₂ en parallèle avec un condensateur C₂, tandis que, côté unité centrale, un condensateur C₁ isole la tension continue du circuit de traitement (non illustré) du signal engendré par le microphone.

Le fil 302 est relié à la masse dans l'unité centrale et relié au fil 303 comme illustré dans le combiné 200. Un premier interrupteur à poussoir fugitif I₁ est monté en série sur le fil 303 dans le combiné, et ce fil, du côté du poste 100, attaque l'entrée d'un amplificateur de commande A₁.

Un second interrupteur à poussoir fugitif I₂ est monté entre les fils 303 et 304 en série avec une résistance R₃. Cette résistance permet d'éviter que, lorsque l'interrupteur est fermé, les deux bornes du haut-parleur ne soient court-circuitées.

Deux condensateurs C₃ et C₄ sont prévus aux deux extrémités du fil 304 afin de séparer les signaux alternatifs du haut-parleur et les signaux de nature continue liés à l'interrupteur I₂.

Enfin, un second amplificateur de commande A₂ dans le poste 100 voit son entrée reliée au fil 304, avant le condensateur C₃.

Dans le circuit décrit ci-dessus, les quatre fils, le microphone et le haut-parleur se comporte de la façon classique, en liaison avec des signaux alternatifs basse fréquence S₁ et S₂ véhiculés par ces fils, à ceci près que le haut parleur est ici alimenté par les fils 302 et 304.

Toutefois, les même fils servent à véhiculer en "fantôme" des signaux de commande de fonction.

Dans le présent exemple, la fonction considérée consiste en le pivotement vers le haut ou vers le bas de la partie articulée 150b du terminal, et les sorties des amplificateurs de commande A₁ et A₂ sont reliées à cet effet à un circuit de commande approprié d'un moteur électrique réversible (non représentés).

Lorsque les deux interrupteurs I₁ et I₂ sont ouverts, comme illustré, les entrées des amplificateurs A₁ et A₂ sont chacun à haute impédance; aucun courant ne peut donc circuler dans lesdits amplificateurs, ce qui détermine un premier état de ceux-ci.

Lorsque l'interlocuteur appuie à l'aide d'un doigt sur l'interrupteur I₁, alors l'entrée de l'amplificateur A₁ est portée à la masse, ce qui détermine un second état dans lequel le moteur est actionné, dans le sens de la montée.

De même, lorsque l'utilisateur enforce l'interrupteur I₂, c'est l'entrée de l'amplificateur A₂ qui est portée à la masse via la résistance R₃ de faible valeur. Le moteur est alors excité dans le sens de la descente.

De retour à la figure 1, on peut observer que les interrupteurs I₁ et I₂ sont disposés sur la face interne du combiné 200, sensiblement à mi-chemin entre le microphone 210 et le haut-parleur 220. Cette disposition est particulièrement avantageuse en ce qu'elle permet à l'interlocuteur d'agir sur l'une ou l'autre des touches ou poussoirs des interrupteurs I₁ et I₂ avec les doigts de la main que tient le combiné, l'autre main restant libre.

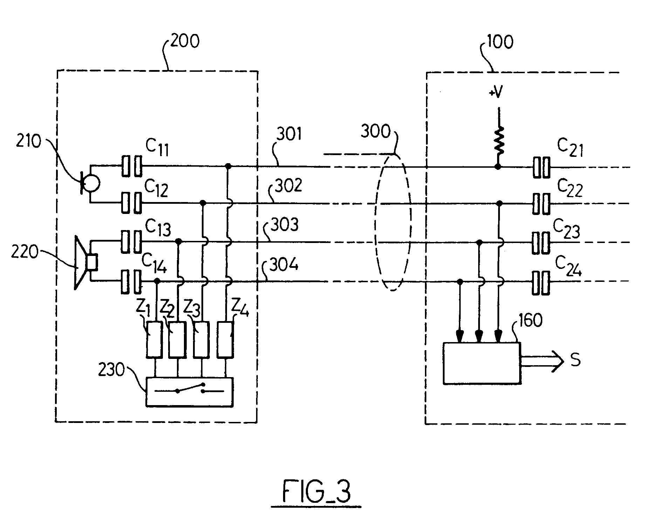

On a représenté sur la figure 3 un schéma de principe d'un autre circuit de commande utilisable dans le cadre de la présente invention. Sur cette figure, des éléments ou parties identiques ou similaires à ceux de la figure 2 portent les mêmes numéros de référence.

Comme on peut l'observer, les quatre fils 301 à 304 sont isolés du microphone 210, du haut-parleur 220 et du reste du terminal, pour ce qui concerne les tensions continues, par deux séries de quatre condensateurs C₁₁ à C₁₄ et C₂₁ à C₂₄ disposés comme illustré.

Une tension de référence +V est appliquée au fil 301. Dans le combiné 200, tous les fils sont reliés par des impédances appropriées Z₁ à Z₄ à une unité de commutation schématiquement indiqué en 230, constituée de préférence par un clavier comportant un ensemble d'interrupteurs à poussoirs, par exemple au nombre de huit. Les impédances ont pour but, tout en véhiculant des tensions continues sensiblement sans les atténuer, de ne pas affecter les circuits de sortie du microphone et d'entrée du haut-parleur, tous deux à basse impédance.

On comprend que, chacun des trois fils 302 à 304 étant susceptible de prendre à chaque instant un état parmi deux possibles, à savoir un état "en l'air" et un état auquel il est porté à la tension +V via l'unité de commutation 230 et les impédances, ces trois fils sont donc capables de véhiculer 2³ = 8 signaux de commande.

A cet égard, l'unité de commutation 230 comprend de préférence un circuit logique combinatoire ou codeur apte à établir une correspondance bi-univoque entre chacune des huit touches du clavier et l'une parmi les huit combinaisons de tensions possibles sur les fils 302 à 304. Un tel circuit se présentera avantageusement sous la forme d'un réseau logique programmable à très haute intégration.

Du côté du poste 100, il est prévu un circuit homologue 160 recevant les signaux continus présents sur les trois fils 302-304 et apte à décoder ces signaux pour les convertir en huit signaux de commande spécifiques (faisceau de sortie S).

Il est ainsi possible selon l'invention, sans modifier en substance la construction d'un combiné téléphonique ordinaire et en particulier en utilisant seulement les quatre fils de son cordon de raccordement, c'est-à-dire d'une façon économique et pratique, d'opérer diverses commandes de fonctions d'un terminal du type visiophone ou même d'un simple poste téléphonique sans obliger l'utilisateur à se déplacer et en lui laissant libre la main qui ne tient pas le combiné. Des exemples de fonctions pouvant être ainsi commandées sont les suivants :
- réglage du cadrage de l'interlocuteur par déplacement motorisé de la caméra ou d'une partie du terminal dont elle est solidaire, ou encore par action motorisée sur la distance focale de l'objectif de ladite caméra,
- en corrollaire, passage du terminal en mode dit d'auto-contrôle, dans lequel l'interlocuteur visualise temporairement sur l'écran sa propre image, à des fins de réglage,
- réglage de l'image visualisée sur le terminal, et en particulier de la lumière, du contraste, de la saturation et de la référence de blanc,
- passage en mode dit "mains libres",
- écoute amplifiée, avec niveau sonore réglable,
- réglage de l'intensité d'un éclairage auxiliaire prévu sur le terminal.

Bien que l'on ait décrit dans ce qui précède des commandes de fonctions en mode local, c'est-à-dire que l'interlocuteur agit sur les diverses fonctions de son seul terminal, l'invention trouve également avantageusement application dans la commande des fonctions de l'abonné distant. A cet égard, des signaux de commande appropriés peuvent être véhiculés sur le réseau de transmission entre les deux terminaux d'abonné, par exemple dans le canal dit "signalisation d'usager à usager" d'un réseau de type Réseau Numérique à Intégration de Services (RNIS).

Bien entendu, des variantes ou modifications peuvent être apportées par l'homme de l'art.

Par exemple, le spécialiste saura aisément concevoir des filtres pour éviter que les diverses commutations n'engendrent des bruits indésirables dans les canaux audio du microphone et du haut-parleur.

De plus, on pourra accroître le nombre de commandes possibles à partir du combiné par divers procédés; notamment on pourra utiliser en association avec les interrupteurs un système de ponts diviseurs à résistances, une valeur de tension donnée parmi plusieurs tensions possibles sur un fil correspondant à une commande de fonction donnée. Une autre solution peut consister à effectuer deux commandes différentes sur une même touche, ou même davantage, par appui sur celle-ci une seule fois dans un cas et deux fois rapprochées dans l'autre. Enfin, si l'on incorpore la tension de référence +V (voir figure 3) au combiné lui-même, par exemple à l'aide d'une batterie, on libère ainsi un fil supplémentaire pour la transmission de données vers le poste. Ainsi, dans le cas de la figure 3, on obtient 2⁴ = 16 possibilités de commandes.

## Revendications

1. Terminal de télécommunication du type visiophone, comprenant, dans un boîtier principal, une unité centrale (100), une caméra de prises de vues (110) et un écran de visualisation (120), ainsi que des moyens tels qu'un moteur pour modifier au moins un paramètre de prise de vues ou de visualisation, tel que le cadrage du sujet, le terminal comprenant en outre un microphone (210) et un haut-parleur (220), et des moyens de commutation (I1, I2; 230) prévus à l'extérieur dudit boîtier principal, pour la commande manuelle à distance par l'utilisateur du ou desdits paramètres, caractérisé en ce qu'il comprend en outre un combiné (200) qui abrite ledit microphone (210) et ledit haut-parleur (220), qui est relié à ladite unité centrale par un cordon (300) à plusieurs fils (301-304) véhiculant les signaux de sortie du microphone et d'entrée du haut parleur, et qui abrite également lesdits moyens de commutation (I1; I2; 230), et en ce que les signaux de commande correspondant à l'actionnement desdits moyens de commutation sont véhiculées dans ledit cordon sous forme de tensions continues fantômes.

2. Terminal selon la revendication 1, caractérisé en ce que les moyens de commutation comprennent deux interrupteurs à poussoir (I₁, I₂) aptes à sélectivement mettre à la masse les fils (303, 304) d'alimentation du haut-parleur (220).

3. Terminal selon la revendication 2, caractérisé en ce que les deux interrupteurs (I₁, I₂) commandent bidirectionellement un moteur d'entraînement d'une partie mobile (150b) de l'unité centrale, ladite partie mobile portant ladite caméra, pour ainsi effectuer un cadrage de l'utilisateur.

4. Terminal selon la revendication 1, caractérisé en ce que l'un des fils (301) du cordon (300) véhicule vers le combiné (200) une tension de référence (V) et en ce que les moyens de commutation comprennent un ensemble de touches (230) associé à un circuit logique, de telle sorte qu'à une touche correspond une combinaison donnée de tensions sur les autres fils (302-304), qui détermine une commande de fonction donnée.

5. Terminal selon la revendication 4, caractérisé en ce que le cordon (300) comporte quatre fils (301-304) et véhicule jusqu'à huit signaux de commande de fonction différents.

6. Terminal selon l'une des revendications 1 à 5, caractérisé en ce qu'au moins certains des fils (301-304) sont isolés du microphone (210), du haut-parleur (220) et des circuits associés de l'unité centrale, du point de vue des tensions continues, par des condensateurs (C₃, C₄; C₁₁-C₁₄, C₂₁- C₂₄).

## Claims

1. A telecommunications terminal of the video phone type, comprising in a main housing a central unit (100), a camera (110) and a display screen (120), as well as means such as a motor for changing at least one image taking or display parameter, such as the subject framing, the terminal further comprising a microphone (210) and a speaker (220), and switching means (I₁ , I₂ ; 230) provided outside said main housing, for the remote manual control by the user of said at least one parameter, characterized in that it further comprises a handset (200) housing said microphone (210) and said speaker (220), which is connected to said central unit via a cord (300) having a plurality of wires (301-304) conveying the output signals of the microphone and the input signals of the speaker, and which also houses said switching means (I₁ ; I₂ ; 230), and in that said control signals corresponding to the actuation of said switching means are conveyed in said cord in the form of phantom D.C voltages.

2. A terminal according to claim 1, characterized in that the switching means comprise two pushbutton switches (I₁, I₂) suitable for connecting the speaker (220) feed wires (303, 304) to ground.

3. A terminal according to claim 2, characterized in that the two switches (I₁ , I₂ ) control forwards and reverse motion of a motor for driving a moving portion (150b) of the central unit, said moving portion carrying said camera, thereby enabling the image of the user to be framed.

4. A terminal according to claim 1, characterized in that one of the wires (301) in the cord (300) conveys a reference voltage (V) to the handset (200), and in that the switching means comprise a set of keys (230) associated with a logic circuit, such that each key corresponds to a given combination of voltages on the other wires (302-304), which combination determines the control of a given function.

5. A terminal according to claim 4, characterized in that the cord (300) contains four wires (301-304) and conveys up to eight different control signals.

6. A terminal according to any one of claims 1 to 5, characterized in that at least some of the wires (301-304) are D.C isolated from the microphone (210), from the speaker (220), and from the associated circuits of the central unit by means of capacitors (C₃ , C₄ ; C₁₁-C₁₄, C₂₁-C₂₄).

## Patentansprüche

1. Telekommunikationsendgerät von der Art eines Bildtelefons, umfassend in einem Hauptgehäuse eine Zentraleinheit (100), eine Kamera zur Bildaufnahme (110) und eine Bildwiedergabeeinheit (120), des weiteren Einrichtungen, wie einen Motor zur Veränderung mindestens eines Parameters der Bildaufnahme oder der Bildwiedergabe, wie der Bildeinstellung des Aufnahmegegenstandes, wobei das Endgerät außerdem ein Mikrophon (210) und einen Lautsprecher (220) sowie Umschaltmittel (I₁, I₂; 230), welche außerhalb des genannten Hauptgehäuses vorgesehen sind, für die manuelle Steuerung des oder der Parameter auf Entfernung durch den Benutzer umfaßt, dadurch gekennzeichnet, daß es zusätzlich einen Handapparat (200) umfaßt, welcher das Mikrophon (210) und den Lautsprecher (220) einschließt und welcher mit der Zentraleinheit über eine Schnur (300) mit einer Mehrzahl von Drähten (301 bis 304) verbunden ist, welche die Ausgangssignale des Mikrophons und die Eingangssignale für den Lautsprecher überträgt, wobei der Handapparat gleichermaßen die Umschaltmittel (I₁; I₂; 230) einschließt, und daß die zur Betätigung der Umschaltmittel dienenden Steuersignalein der Schnur in Form von Phantomgleichspannungen übertragen werden.

2. Endgerät nach Anspruch 1, dadurch gekennzeichnet, daß die Umschaltmittel zwei Druckschalter (I₁, I₂) umfassen, welche in der Lage sind, wahlweise die Zuleitungsdrähte (303, 304) des Lautsprechers (220) an Masse zu legen.

3. Endgerät nach Anspruch 2, dadurch gekennzeichnet, daß die beiden Schalter (I₁, I₂) einen Antriebsmotor für einen beweglichen Teil (150b) der Zentraleinheit, wobei der bewegliche Teil die Kamera trägt, in zwei Richtungen steuern, um eine Bildeinstellung des Benutzers zu bewirken.

4. Endgerät nach Anspruch 1, dadurch gekennzeichnet, daß einer der Drähte (301) der Schnur (300) eine Referenzspannung (V) zu dem Handapparat (200) überträgt und daß die Umschaltmittel eine mit einer logischen Schaltung verbundene Tastenanordnung (230) umfaßt, derart, daß eine Taste einer vorgegebenen Spannungskombination auf den anderen Drähten (302 bis 304) entspricht, welche einen Steuerbefehl von vorgegebener Funktion bestimmt.

5. Endgerät nach Anspruch 4, dadurch gekennzeichnet, daß die Schnur (300) vier Drähte (301 bis 304) umfaßt und bis zu acht Steuersignale von unterschiedlicher Funktion überträgt.

6. Endgerät nach einem der Ansprüche 1 bis 5, dadurch gekennzeichnet, daß mindestens bestimmte Drähte (301 bis 304) von dem Mikrophon (210), dem Lautsprecher (220) und den mit der Zentraleinheit verbundenen Schaltkreisen gleichspannungsmäßig durch Kondensatoren (C₃, C₄; C₁₁ bis C₁₄; C₂₁ bis C₂₄) isoliert, sind.
